# EUROPEAN PATENT SPECIFICATION

(11) **EP 1 245 414 B1**
(45) Date of publication and mention of the grant of the patent: **25.05.2005**
(21) Application number: 02006545.4
(22) Date of filing: 20.03.2002
(51) Int. Cl.: B60C 25/138

(54) **Device for rotary movement of vehicle wheel mounting flanges in tire changing machines**
Vorrichtung zur Drehbewegung eines Radbefestigungsflansches in einem Reifenwechselgerät
Dispositif de rotation de la bride de montage de roue dans une machine à changer les pneumatiques

(30) Priority: 27.03.2001 IT MO010010
(43) Date of publication of application: 02.10.2002
(73) Proprietor: GIULIANO S.P.A., 42015 Correggio (Reggio Emilia) (IT)
(72) Inventor: Bonacini, Fabrizio, 42015 Correggio (Pro. of Reggio Emilia) (IT)
(74) Representative: Modiano, Guido, Dr.-Ing.

(56) References cited:
- EP-A- 0 644 071
- DE-A- 2 917 589
- US-A- 3 165 142
- US-A- 4 538 660
- US-A- 4 586 551
- US-A- 5 050 659

## Description

The present invention relates to a device for rotary movement of vehicle wheel mounting flanges in tire changing machines.

Gearmotor assemblies have long been installed in tire changing machines in order to motorize the flanges that support the coupling devices for the wheels on which the operator is to work.

Although these assemblies have a good overall performance, they suffer drawbacks due mainly to the cost of each one of said assemblies and to the overall dimensions assumed by the tire changing machine that adopts them.

The problem of costs affects the number of units sold commercially, while the dimensions are sometimes excessive for small spaces.

Furthermore, small workshops require machines that have an essential structure and are inexpensive, since their use is substantially limited with respect to that of specialized tire fitters.

DE 29 17 589 and US-A-5 050 659 disclose conventional tire changing means having a combination of features as set forth in the precharacterizing portion of the appended claim 1.

The aim of the present invention is to eliminate the above noted drawbacks of the prior art by providing a device for rotary movement of vehicle wheel mounting flanges in tire changing machines that has a very simple structure and very low costs, yet offers complete and satisfactory performance and has a modest space occupation.

In accordance with the invention, there is provided a device for rotary movement of vehicle wheel mounting flanges in tire changing machines as defined in the appended claims.

Further characteristics and advantages of the present invention will become better apparent from the detailed description of a preferred but not exclusive embodiment of a device for rotary movement of vehicle wheel mounting flanges in tire changing machines, illustrated only by way of non-limitative example in the accompanying drawings, wherein:

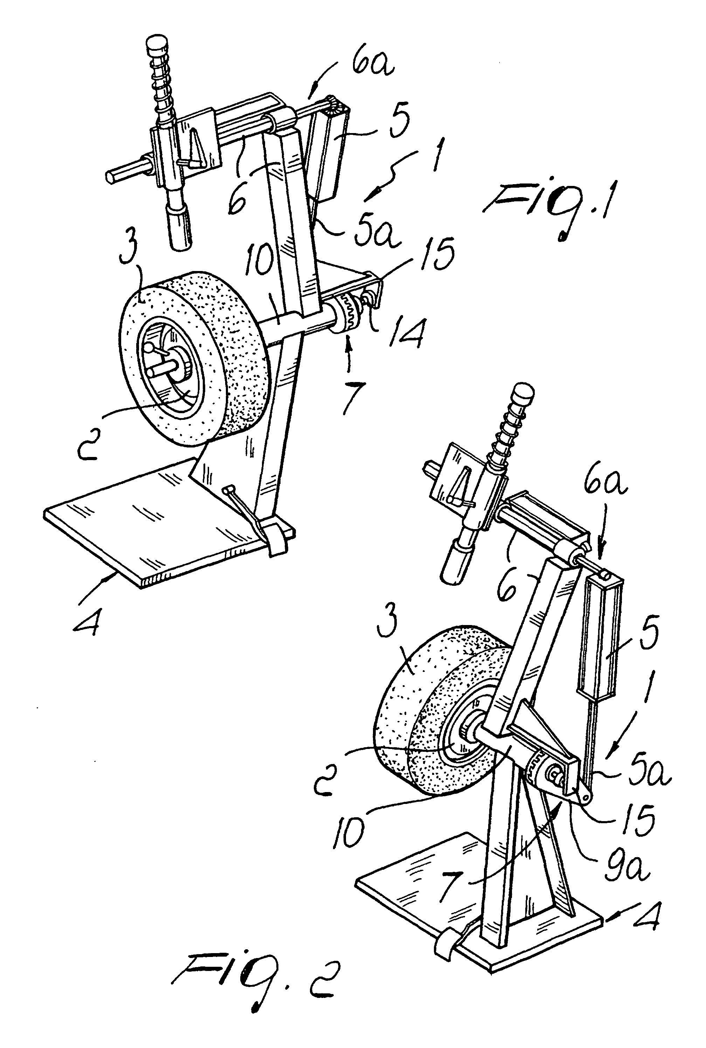

Figures 1 and 2 are, respectively, front and rear perspective views of a tire changing machine provided with the movement device according to the invention;

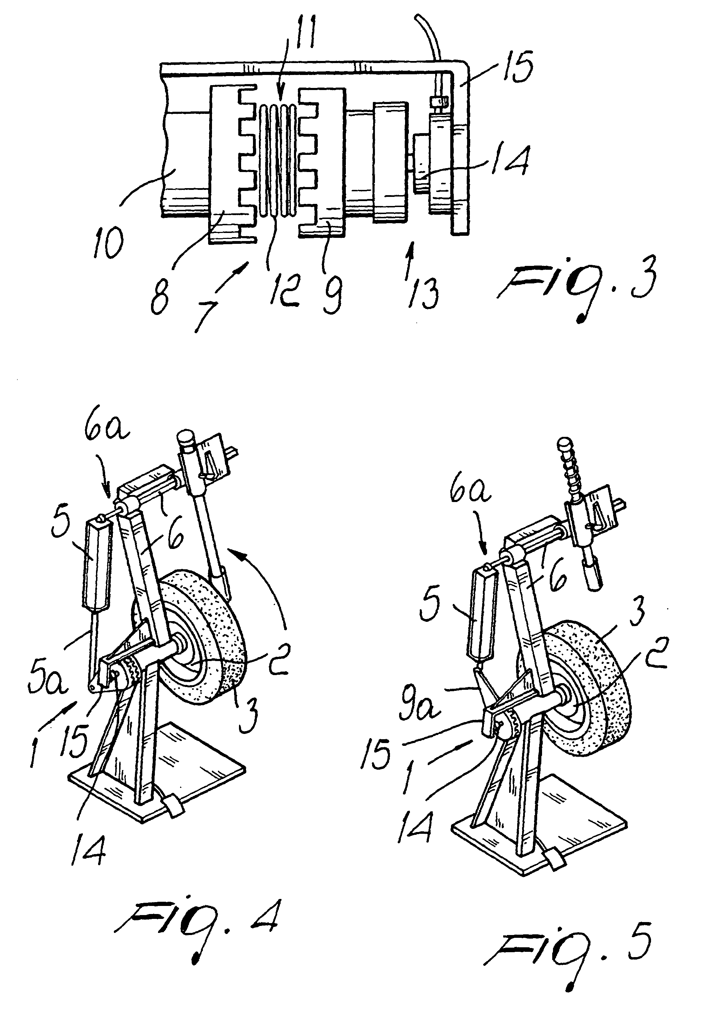

Figure 3 is an enlarged-scale detail view of an assembly for alternate coupling to two crown gears, which is part of the invention;

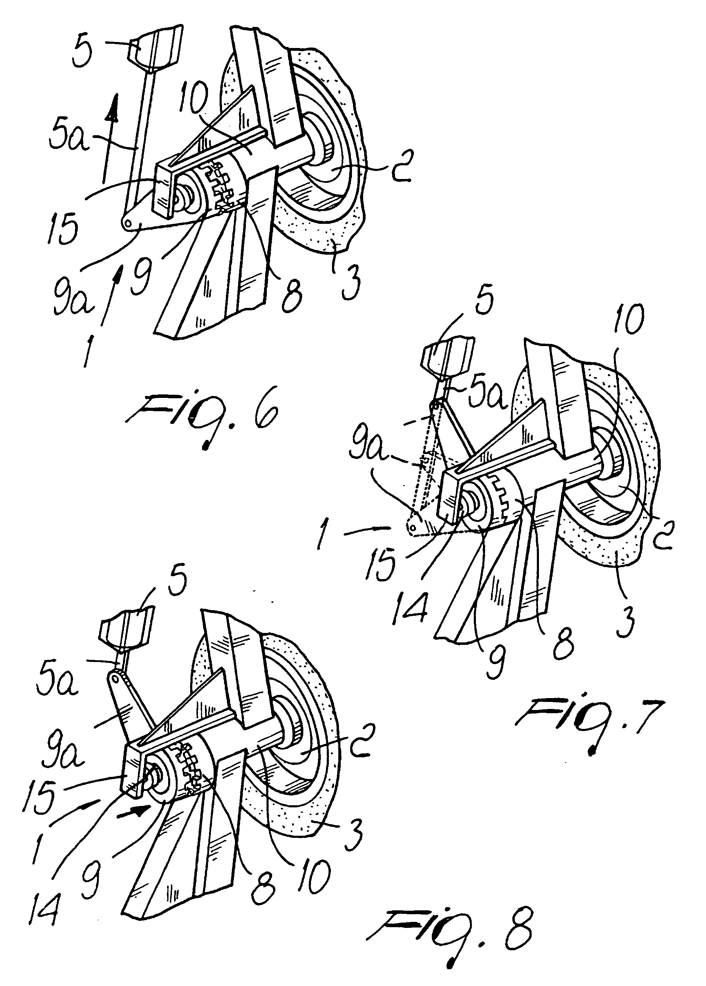

Figures 4 and 5 illustrate the operation of the device according to the invention;
Figures 6-8 are detailed enlarged views of the device shown in the operating phases of Figures 4, 5.

With reference to the figures, the reference numeral 1 generally designates a device for the rotary motion of the flanges 2 for coupling the wheels 3 of vehicles in tire changing machines 4. The device 1 comprises at least one first hydraulic or pneumatic actuator 5, which is rigidly coupled to the frame 6 of the machine 4 by means of an oscillating articulation means 6a and rotationally actuates, through successive arcs, an assembly 7 for alternate coupling, having two crown gears 8 and 9, one of which, the innermost one 8 in the specific case, is connected to the shaft 10 for rotating said flanges 2.

The base of the stem 5a of the hydraulic or pneumatic actuator 5 is articulated to the outermost gear 9 by means of a lever extension 9a that is rigidly coupled to said gear and is adapted to constitute a lever arm.

An elastic means 11 is interposed between the gears 8 and 9, provides constant contrast to their meshing, and is constituted by at least one helical spring 12 that can be loaded by compression.

Means 13 are provided, between the outer gear 9 and the frame 6 of the tire changing machine 4, for alternately axially pushing toward the other gear 8; said means are constituted by a second hydraulic or pneumatic actuator 14, which is interposed at right angles between the rear face of said gear 9 that lies opposite the toothed face and a support 15, which is in practice a suitably contoured bracket rigidly coupled to the frame 6.

The operation of the invention is as follows: during the initial part of the thrust, the first actuator 5 and the second actuator 14 are not supplied with the pressurized fluid, which is air in the specific case: the stem 5a is retracted upward and the helical spring 12 keeps the gears 8 and 9 mutually spaced.

When rotation is to be imparted, the air delivery is opened and the stem 5a starts to push on the lever extension 9a.

At the same time, the second actuator 14 pushes axially the gear 9 so that it engages the opposite gear 8, and the rotation imparted by the actuator 5 is transmitted to the shaft 10 and accordingly to the flange 2 on which the wheel 3 is mounted.

Once the rotational arc has been completed, the air delivery is interrupted and the actuators 5 and 14 resume their initial configuration, i.e., the first actuator 5 retracts the stem 5a and the gears 8 and 9 disengage under the thrust of the helical spring 12; in this manner, the gear 9 can rotate in reverse to follow the upward return of the stem 5a.

This movement is repeated cyclically until the operator has performed all the required interventions on the wheel 3.

Substantially, the gears 8 and 9 mutually mesh in the active thrusting step of the first actuator 5 and are disengaged in the retraction step of the stem 5a.

Said actuator 5, in order to allow said movement, is rigidly coupled to the frame 6 after interposing an articulation means 6a which oscillates about a horizontal axis; said means 6a is not described in detail because it is of a type known to the person skilled in the art.

In practice it has been found that the described invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for rotary movement of vehicle wheel mounting flanges in tire changing machines, comprising at least one first hydraulic or pneumatic actuator (5) which is coupled so as to be oscillatable to the frame (6) of a said machine (4) and rotationally actuates, through successive arcs, an assembly (7) having two crown gears (8, 9) for alternate coupling which is connected to the rotation shaft (10) of a said flange (2), and means (13) being interposed between at least one gear (9) of said assembly (7) and the frame (6) of said tire changing machine (4) for pushing alternately and axially toward the other gear (8), **characterized in that** an elastic means (11) is interposed between said gears (8, 9) for contrasting the coupling thereof.

2. The device according to claim 1, **characterized in that** the base of the stem (5a) of said hydraulic or pneumatic actuator (5) is articulated to one of said gears (8, 9).

3. The device according to claim 1, **characterized in that** said elastic contrast means (11) is constituted by at least one helical spring (12) which can be loaded by compression.

4. The device according to claim 1, **characterized in that** said alternate pushing means (13) are constituted by a second hydraulic or pneumatic actuator (14) which is interposed at right angles between the rear face of said at least one gear (9) that lies opposite the toothed face and a support (15) that is rigidly coupled to said frame (6) of the machine (4).

5. The device according to claim 2, **characterized in that** said at least one gear (9) is directed toward the outside of said frame (6).

6. The device according to claim 5, **characterized in that** said outer gear (9) is provided with a monolithic lever extension (9a) for the articulated coupling of said base of the stem (5a).

7. The device according to claim 4, **characterized in that** said first (5) and second (14) actuators are activated or deactivated repeatedly and simultaneously.

## Patentansprüche

1. Vorrichtung zur Drehbewegung eines Radbefestigungsflansches in einem Radwechselgerät, mit mindestens einem ersten hydraulischen oder pneumatischen Antrieb (5), der mit dem Rahmen (6) eines Gerätes (4) schwenkbar verbunden ist und eine mit zwei Kronenrädern (8, 9) versehene Baugruppe (7) zum An- und Abkoppeln, die mit der Drehwelle (10) des Flansches (2) verbunden ist, in aufeinanderfolgende Kreisbogenbewegungen versetzt, und mit einer Vorrichtung (13), die zwischen mindestens einem Zahnrad (9) der Baugruppe (7) und dem Rahmen (6) des Reifenwechselgerätes (4) angeordnet ist, um abwechselnd und axial zum anderen Zahnrad (8) einen Schub auszuüben, **dadurch gekennzeichnet, dass** eine elastische Vorrichtung (11) zwischen den Zahnrädern (8, 9) angeordnet ist, um sie auf Abstand zu halten.

2. Vorrichtung nach Anspruch 1, **dadurch gekennzeichnet, dass** der Fuß der Stange (5a) des hydraulischen oder pneumatischen Antriebes (5) mit einem der Zahnräder (8, 9) gelenkig verbunden ist.

3. Vorrichtung nach Anspruch 1, **dadurch gekennzeichnet, dass** die elastische Abstandshaltevorrichtung (11) aus mindestens einer Spiralfeder (12), die durch Druck gespannt werden kann, gebildet ist.

4. Vorrichtung nach Anspruch 1, **dadurch gekennzeichnet, dass** die Wechselschubvorrichtung (13) aus einem zweiten hydraulischen oder pneumatischen Antrieb (14) gebildet ist, der in rechten Winkeln zwischen der hinteren Fläche mindestens eines Zahnrades (9), die sich gegenüber der gezahnten Fläche befindet, und einer mit dem Rahmen (6) des Gerätes (4) starr verbundenen Stütze (15) angeordnet ist.

5. Vorrichtung nach Anspruch 2, **dadurch gekennzeichnet, dass** mindestens ein Zahnrad (9) zur Außenseite des Rahmens (6) gerichtet ist.

6. Vorrichtung nach Anspruch 5, **dadurch gekennzeichnet, dass** das äußere Zahnrad (9) mit einer einteiligen Hebelverlängerung (9a) zur gelenkigen Verbindung mit dem Fuß der Stange (5a) versehen ist.

7. Vorrichtung nach Anspruch 4, **dadurch gekennzeichnet, dass** der erste Antrieb (5) und der zweite Antrieb (14) wiederholt und gleichzeitig aktiviert oder deaktiviert werden.

## Revendications

1. Dispositif de rotation de bride de montage de roue dans une machine à changer les pneumatiques, comprenant au moins un premier actionneur hydraulique ou pneumatique (5) qui est accouplé de manière à pouvoir osciller au cadre (6) d'une dite machine (4) et qui actionne en rotation, sur des arcs successifs, un ensemble (7) ayant deux roues dentées à couronne (8, 9) pour un accouplement alterné qui est raccordé à l'arbre de rotation (10) d'une dite bride (2), et un moyen (13) étant interposé entre au moins une roue (9) dudit ensemble (7) et le cadre (6) de ladite machine à changer les pneumatiques (4) pour pousser de façon alternée et axiale vers l'autre roue (8), **caractérisé en ce qu'**un moyen élastique (11) est interposé entre lesdites roues (8, 9) pour contraster l'accouplement de celles-ci.

2. Dispositif selon la revendication 1, **caractérisé en ce que** la base de la tige (5a) dudit actionneur hydraulique ou pneumatique (5) est articulée à l'une desdites roues (8, 9).

3. Dispositif selon la revendication 1, **caractérisé en ce que** ledit moyen de contraste élastique (11) est constitué par au moins un ressort hélicoïdal (12) qui peut être chargé par compression.

4. Dispositif selon la revendication 1, **caractérisé en ce que** lesdits moyens de poussée alternée sont constitués par un second actionneur hydraulique ou pneumatique (14) qui est interposé à angle droit entre la face arrière de ladite au moins une roue (9) qui se trouve à l'opposé de la face dentée et un support (15) qui est accouplé de façon rigide audit cadre (6) de la machine (4).

5. Dispositif selon la revendication 2, **caractérisé en ce que** ladite au moins une roue (9) est dirigée vers l'extérieur dudit cadre (6).

6. Dispositif selon la revendication 5, **caractérisé en ce que** ladite roue externe (9) est pourvue d'un prolongement en levier monolithique (9a) pour l'accouplement articulé de ladite base de la tige (5a).

7. Dispositif selon la revendication 4, **caractérisé en ce que** lesdits premier (5) et second (14) actionneurs sont activés ou désactivés de façon répétée et simultanée.
